Europäisches Patentamt

European Patent Office

Office européen des brevets

(11) Veröffentlichungsnummer: **0 036 182**
**B1**

(12) EUROPÄISCHE PATENTSCHRIFT

(45) Veröffentlichungstag der Patentschrift:
29.12.82

(21) Anmeldenummer: 81101831.6

(22) Anmeldetag: 12.03.81

(51) Int. Cl.³: **C 02 F 3/12**, C 02 F 3/20

(54) Umwälzeinrichtung für Behandlungsbecken.

(30) Priorität: 17.03.80 DE 3010222

(43) Veröffentlichungstag der Anmeldung:
23.09.81 Patentblatt 81/38

(45) Bekanntmachung des Hinweises auf die Patenterteilung:
29.12.82 Patentblatt 82/52

(84) Benannte Vertragsstaaten:
AT BE CH DE FR GB IT LI LU NL

(56) Entgegenhaltungen:
DE-A-1 484 848
DE-A-1 584 890
DE-A-2 324 433
DE-A-2 349 218
DE-A-2 409 269
DE-A-2 717 756
DE-B-2 703 379

(73) Patentinhaber: Passavant-Werke AG & Co. KG,
D-6209 Aarbergen 7 (DE)

(84) Benannte Vertragsstaaten: BE CH DE FR IT LI LU NL AT

(73) Patentinhaber: U. Passavant AG Michelbacher Hütte,
D-6209 Aarbergen 7 (DE)

(84) Benannte Vertragsstaaten: GB

(72) Erfinder: Muskat, Josef, Dr., Auf dem Langwehr,
D-6209 Aarbergen 2 (DE)
Erfinder: Nudinger, Günter, Dipl.-Ing., Heidestrasse 14,
D-6209 Aarbergen 2 (DE)
Erfinder: Buschkiel, Wolfgang, Dipl.-Ing.,
Humboldtstrasse 11, D-6209 Aarbergen 2 (DE)

(74) Vertreter: Glawe, Delfs, Moll & Partner Patentanwälte,
Postfach 26 01 62 Liebherrstrasse 20,
D-8000 München 26 (DE)

## Umwälzeinrichtung für Behandlungsbecken

Die Erfindung betrifft eine Umwälzeinrichtung für Behandlungsbecken, insbesondere Misch- und/oder Belüftungsbecken, mit mindestens einem, von einer über dem Becken verfahrbaren Einrichtung getragenen, in den Beckeninhalt tauchenden Schild.

Eine derartige Einrichtung ist aus der DE-B-1 609 004 im Zusammenhang mit einer am Beckenboden vorgesehenen Blasenbelüftung bekannt. Das im wesentlichen den ganzen Beckenquerschnitt ausfüllende starr angebrachte Förderschild sorgt für eine Umwälzung des Beckeninhalts, wodurch der Aufstiegsweg der Blasen verlängert, belüftete und unbelüftete Wasservolumina miteinander gemischt und Schlammablagerungen vermieden werden. Problematisch ist das Anfahren und das Abbremsen einer solchen Umwälzeinrichtung, da hierbei durch die Beschleunigung bzw. Verzögerung des Wassers sehr starke Kräfte wirksam werden. Bei der bekannten Einrichtung ist deshalb eine Anlaufschaltung für ein allmähliches Anfahren vorgesehen. Diese ist jedoch aufwendig und störanfällig, kann Überlastungen des Motors und der Förderschildbefestigung nicht vermeiden, weil es sich um eine Zwangssteuerung handelt, und sie löst zudem nicht das Problem der beim Anhalten der Brücke auftretenden Kräfte. Diese Probleme werden noch dadurch erschwert, daß insbesondere bei Rundbecken die auftretenden Kräfte über die Breite des Förderschildes ungleich verteilt sind.

Aufgabe der Erfindung ist es, eine Umwälzeinrichtung der genannten Art so zu verbessern, daß das Anfahren und Abbremsen auch ohne eine Anlaufschaltung nicht zur Überlastung des Förderschildes, seiner Befestigung und seines Antriebs führt und daß eine Berücksichtigung von über die Beckenbreite ungleichen Strömungsverhältnissen möglich ist.

Erfindungsgemäß ist eine Umwälzeinrichtung der eingangs genannten Art dadurch gekennzeichnet, daß das Schild gelenkig nachgiebig aufgehängt und/oder in sich nachgiebig ausgebildet ist. Das Schild kann dadurch sowohl beim Anfahren als auch beim Abbremsen selbsttätig den Strömungskräften ausweichen, wodurch die Krafteinwirkung auf die Schildaufhängung und den Brückenantrieb vermieden wird. Ordnet man nach einer bevorzugten Ausführungsform die Achse horizontal an, dann übt das durch sein Gewicht nach unten belastete Schild in der hochgeschwenkten Lage eine Förderwirkung auf das Wasser aus, und in dem Maße, in den sich die Wassergeschwindigkeit anpaßt, sinkt das Schild in seine normale Betriebslage nach unten, so daß es den Beckenquerschnitt auf voller Tiefe ausfüllt und seine volle Förderwirkung entfaltet.

In besonders vorteilhafter weiterer Ausgestaltung der Erfindung ist das Schild über seine Breite in mehrere Teilschilde unterteilt, die unabhängig voneinander aufgehängt sind. Hierdurch ist eine besonders gute Anpassung an über die Schildbreite unterschiedliche Strömungsverhältnisse und Widerstandskräfte möglich, wie sie insbesondere bei Rundbecken auftreten. Den bei Rundbecken unterschiedlichen Umfangsgeschwindigkeiten kann man dadurch Rechnung tragen, daß man den radial weiter nach außen liegenden Teilschildern ein auf die wirksame Fläche bezogen größeres Gewicht gibt als weiter innen liegende.

Als unerwarteter weiterer Vorteil der Erfindung wurde gefunden, daß bei an einer Horizontalachse pendelnd aufgehängtem Schild nicht nur eine Umwälzung in Fahrtrichtung der Brücke bewirkt wird, sondern auch eine durchaus erwünschte Querströmung auftritt, die zu einer Flüssigkeitsdurchmischung in Querrichtung des Beckens führt. Es wurde beobachtet, daß bei einem Rundbecken im radial innen liegenden Bereich des Schildes bzw. Teilschildes eine parallel zum Schild radial nach innen gerichtete Strömung vor dem Schild auftritt, der hinter dem Schild eine radial nach außen gerichtete Strömung entspricht. Hierdurch werden auch die vom Beckenboden aufsteigenden Luftblasen entsprechend radial nach innen bzw. außen abgelenkt. Hierdurch wird eine besonders gute Durchmischung von belüftetem und unbelüftetem Wasser erzielt. Ferner hat die Unterteilung und pendelnde Aufhängung des Schildes auch bei Montage, Bedienung und Wartung Vorteile. Für Kontrollarbeiten kann das Schild bzw. jedes Teilschild auf einfachste Weise hochgeschwenkt werden; es können auch einzelne Teilschilde getrennt ausgebaut werden. Beim Anhalten der Brück weicht das Schild bzw. die Teilschilde, verursacht durch das weiterströmende Wasser, in die Gegenrichtung aus, wodurch auch in diesem Betriebszustand eine Krafteinwirkung auf die Schildaufhängung und den Brückenantrieb vermieden wird.

Weitere vorteilhafte Ausgestaltungen der Erfindung bestehen darin, daß die unabhängig voneinander pendelfähigen Teilschilde mindestens zeitweise miteinander koppelbar sind, und/oder daß sie ein besonders, z. B. V-förmiges oder gekrümmtes Profil haben, und/oder daß die horizontale Schwenkachse des Schildes oder der Teilschilde schräg zur Fahrtrichtung der Brücke angestellt ist. Durch diese Maßnahmen kann man gezielt Strömungen in Quer- bzw. Radialrichtung des Beckens erzeugen und dadurch die Umwälzung verbessern oder Schlammablagerungen im Beckenzentrum vermeiden.

Die Erfindung läßt sich auch dadurch verwirklichen, daß man die Schilde oder Teilschilde an vertikalen Achsen befestigt. Die Rückstellkraft, die die Mitnahme des Beckeninhalts bewirkt, kann hierbei z. B. durch Federn aufgebracht werden. Sie kann aber auch durch das Schild selbst erzeugt werden, indem man dieses zumindest in dem achsnahen Bereich aus flexiblem Material herstellt und an der Achse starr befestigt. Eine weitere Möglichkeit, die ohne Federn auskommt, besteht darin, die Schilde frei pendelnd an gegenüber der Vertikalen geneigten Achsen anzulenken. Legt man die Vertikalebene, die man durch diese geneigte Achse legen kann, zumindest angenähert quer zur Fahrtrichtung, dann erzeugt der bei Auslenkung aus dieser Ebene herauswandernde Schwerpunkt ein ähnlich großes Rückstellmoment wie bei Aufhängung an einer horizontalen Achse.

Die Erfindung läßt sich nicht nur bei Rund- und Ringbecken, sondern auch bei sogenannten Arenabecken anwenden, die mehr oder weniger lange gerade Abschnitte besitzen. Auch bei Quadrat- oder Rechteckbecken, bei denen die Schilde nur zeitweise querschnittfüllend sind, läßt sich die erfindungsgemäße Einrichtung zum Umwälzen des Beckeninhalts einsetzen.

Insbesondere für die Verwendung in Quadrat- oder Rechteckbecken ist eine Ausgestaltung der Erfindung geeignet, bei der das Schild an der Brücke mittels eines von Lenkern gebildeten Gelenkvierecks angehängt und in einer zur Räumrichtung vorwärts geneigten Stellung geführt ist. Die Lenker können dabei eine Parallelführung bilden oder zwecks Änderung des Anstellwinkels des Schildes bei Änderung seiner Höhenlage ungleich lang ausgebildet sein. Statt ungleich langer Lenker kann dies auch durch ungleich lange Gelenkpunktabstände erzielt werden. Zweckmäßigerweise wird die Neigung bei zunehmender Höhenlage des Schildes flacher.

Die Erfindung wird im folgenden anhand der Zeichnungen näher erläutert.

Fig. 1 und 2 zeigen im Schnitt bzw. in Draufsicht ein Rundbecken mit einer erfindungsgemäßen Umwälzeinrichtung;

Fig. 3 zeigt die Umwälzeinrichtung in der Seitenansicht;

Fig. 4 zeigt perspektivisch ein Detail der Umwälzeinrichtung;

Fig. 5 zeigt einen Teil einer anderen erfindungsgemäßen Umwälzeinrichtung in der Seitenansicht;

Fig. 6 zeigt die Einrichtung gemäß Fig. 5 in der Draufsicht; und

Fig. 7 zeigt einen Teil einer weiteren erfindungsgemäßen Umwälzeinrichtung in der Seitenansicht.

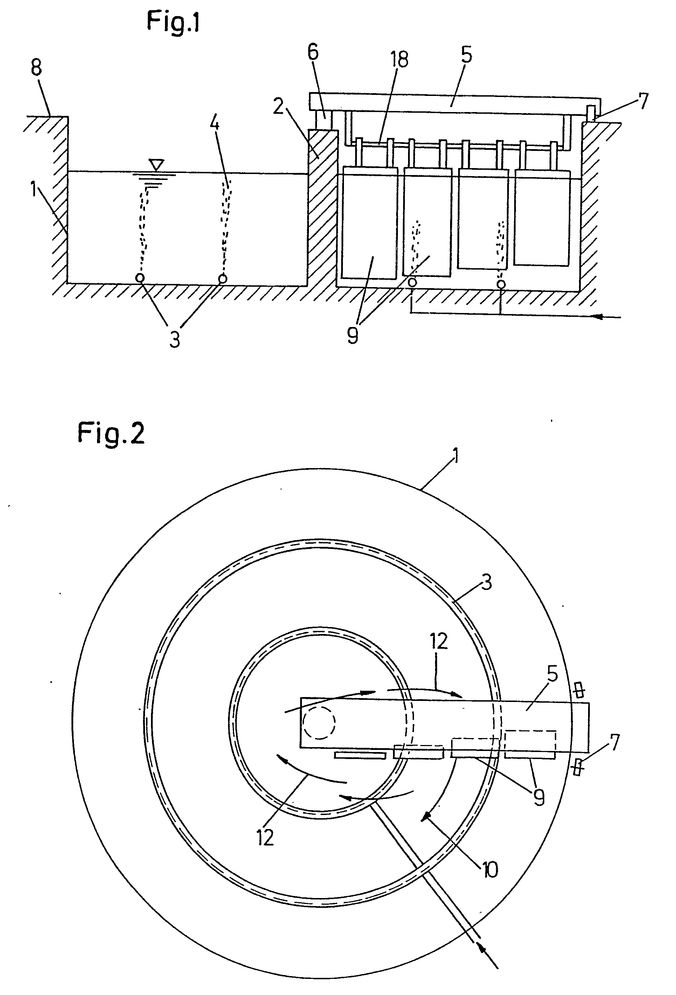

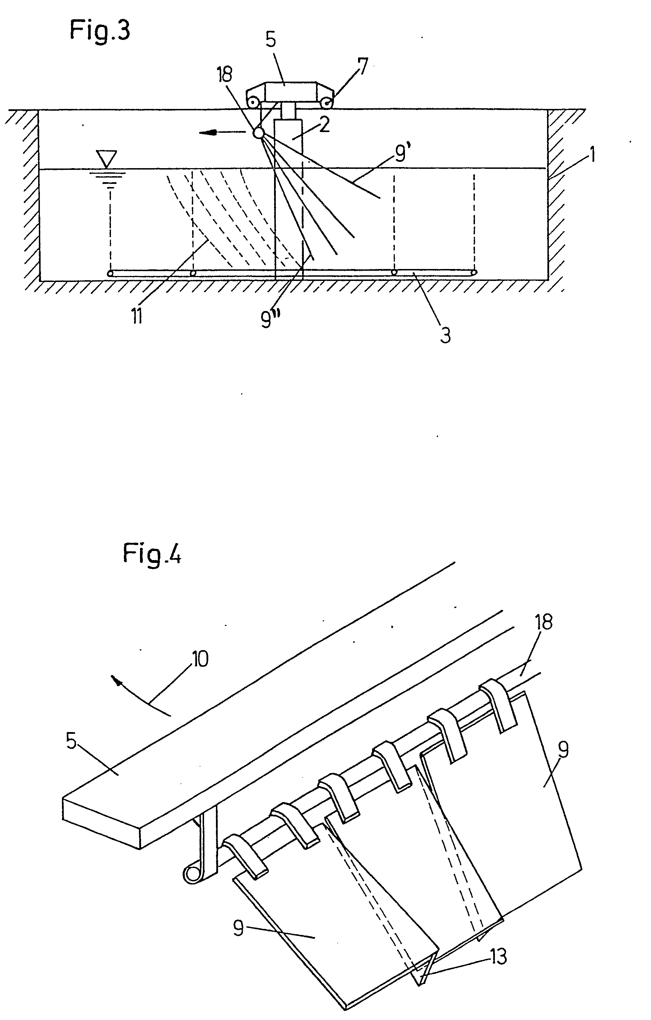

Das in Fig. 1 bis 3 dargestellte Becken 1 ist ein Rundbecken mit einer Mittelsäule 2, auf dessen Boden ringförmige Belüftungsrohre 3 verlegt sind, aus denen Luftblasen 4 aufsteigen. Eine fahrbare Brücke 5 ist mittels eines Drehlagers 6 auf der Säule 2 und mittels eines Fahrwerks 7 auf der Beckenkrone 8 gelagert und trägt oberhalb des Wasserspiegels eine horizontale Achse 18, an der nebeneinander frei pendelnd vier Schilde 9 aufgehängt sind. Wird die Brücke durch ihren (nicht dargestellten) Antriebsmotor in Richtung des Pfeiles 10 im Umlauf versetzt, so üben die Schilde 9 auf das Wasser eine Schubkraft aus, und werden ihrerseits durch den Widerstand des Wassers nach hinten und oben in die in Fig. 3 dargestellte Anfahrstellung 9' verschwenkt. Der Antriebsmotor der Brücke 5 kann somit sofort mit voller Geschwindigkeit anfahren, da eine Überlastung des Motors, der Brücke und der Schildaufhängung durch das selbsttätige Ausweichen der Schilde vermieden wird. In dem Maße, in dem die Strömungsgeschwindigkeit des Wassers zunimmt, pendeln die Schilde 9 in ihre normale Arbeitsstellung, z. B. 9'' in Fig. 3, zurück. Beim Anhalten der Brücke können die Schilde 9 durch Pendeln in entgegengesetzter Richtung dem zunächst weiter strömenden Wasser ausweichen.

Die von den Schilden erzeugte Umwälzung des Wassers in Umfangsrichtung des Beckens bewirkt, daß die Luftblasen aus den Rohren 3 schräg mit verlängertem Weg in dem Wasser aufsteigen, wie in der Fig. 3 bei 11 angedeutet. Durch die pendelfähige Anordnung der Schilde tritt aber überraschenderweise noch eine zusätzliche Radialumwälzung des Wassers im radial inneren Beckenbereich auf, die in Fig. 2 durch die Pfeile 12 dargestellt ist, d. h. in Fahrtrichtung vor den Schilden 9 eine radial nach innen gerichtete Strömung und hinter den Schilden eine radial nach außen gerichtete Strömung. Hierdurch werden auch die aufsteigenden Luftblasen entsprechend abwechselnd radial nach innen und außen abgelenkt.

Bei Rundbecken ist die Geschwindigkeit der Brücke und entsprechend auch der vom Wasser ausgeübte Widerstand nach außen größer als innen, so daß beim Anfahren die weiter nach außen befindlichen Schilde 9 in eine höhere Lage schwenken werden als die inneren Schilde. Damit durch die dabei entstehenden dreieckigen Lücken zwischen benachbarten Schilden nicht zu viel Wasser entweichen kann und dadurch die Förderwirkung beeinträchtigt wird, können an den lotrechten Kanten der Schilde senkrecht zur Schildfläche vorstehende Trennwände 13 vorgesehen sein, die in Fig. 4 gezeigt sind, und die die genannten dreieckigen Zwischenräume zwischen benachbarten Schilden überbrücken.

Bei der in Fig. 2 bis 4 dargestellten Ausführungsform verläuft die Mittelachse der Brücke 5 radial zum Becken, die horizontale Pendelachse 18 der Schilde ist jedoch zur Mittelachse der Brücke versetzt angeordnet und verläuft deshalb schräg zur Radialrichtung. Es sind auch Schrägstellungen dieser Pendelachse 18 bezüglich der Mittelachse der Brücke möglich. Hierdurch können gezielt zusätzliche Radialkomponenten der Umwälzströmung erzeugt werden, z. B. um Schlammablagerungen in der Beckenmitte zu verhindern oder um durch vermehrten Queraustausch die Belüftungswirkung zu verbessern. Ähnliche Effekte können durch (nicht dargestellte) Profilierung der Schilde 9 erzielt werden, z. B. durch V-förmige Schilde oder durch z. B. pflugscharähnliche Wölbung der Schilde 9. Auch kann die Pendelachse 18 nach innen über den Beckenmittelpunkt hinaus verlängert werden und auf der anderen Seite der Säule 2 ein oder mehrere weitere Schilde 9 tragen.

Die benachbarten Teilschilde 9 können miteinander gekoppelt sein, z. B. durch Ketten, Seile od. dgl., um das Ausmaß ihrer gegenseitigen Verschwenkung zu begrenzen. Es können auch starre Koppeleinrichtungen, z. B. Riegel zum nur zeitweisen Koppeln benachbarter Räumschilde vorgesehen sein.

Eine weitere, nicht dargestellte Ausführungsform der Erfindung weist Schilde auf, die der Höhe nach in zwei oder mehr gelenkig miteinander verbundene Abschnitte unterteilt sind. Statt dessen oder zusätzlich können die Schilde oder ihre Abschnitte aus flexiblem Material bestehen.

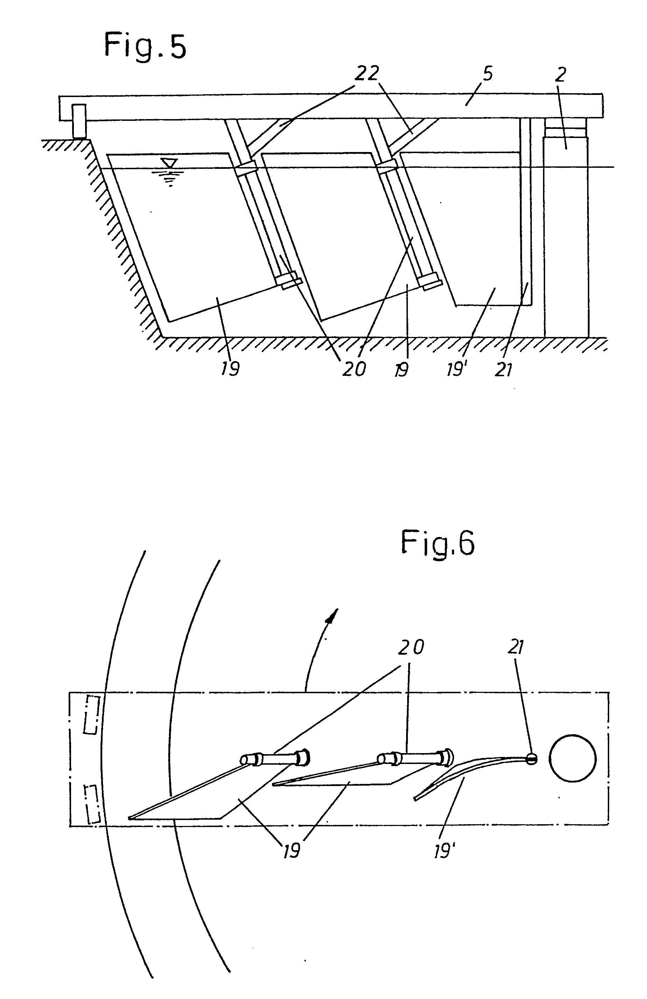

Bei der in den Fig. 5 und 6 dargestellten Umwälzeinrichtung sind die äußeren Schilde 19 an vertikal geneigten Pendelachsen 20 befestigt, so daß ihr Schwerpunkt sich beim Auspendeln nach oben bewegt. Der innerste Schild 19' ist starr an einer vertikalen Tragstange 21 befestigt und besteht aus flexiblem Material, welches dem Schild 19' eine genügend große Rückstellkraft für die Mitnahme des Beckeninhaltes verleiht. Die Pendelachsen 20 und die Tragstange 21 sind in einer radialen Vertikalebene liegend, an der Brücke 5 befestigt. Um die Stabilität der Pendelachsen 20 zu verbessern, sind diese mittels Trägern 22 zusätzlich abgestützt.

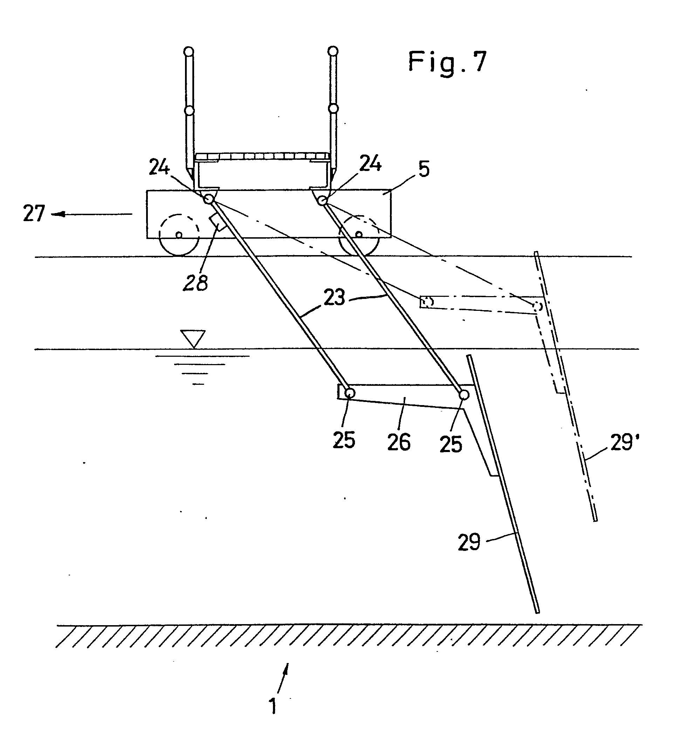

Bei der in der Fig.7 dargestellten Umwälzeinrichtung ist das Schild 29 mittels eines von Lenkern 23 gebildeten Gelenkvierecks an der Brücke 5 aufgehängt und in einer zur Räumrichtung 27 vorwärts geneigten Stellung geführt. Die Lenker 23 sind einerseits über die Lenkpunkte 24 mit der Brücke 5 und andererseits über Gelenkpunkte 25 mit einem Winkelteil 26, das mit dem Schild 29 starr verbunden ist, verbunden. Die Lenker 23 bilden eine Parallelführung, durch die das Schild 29 immer die in der Zeichnung dargestellte, vorwärts geneigte Stellung einnimmt. Bei laufender Brücke wirkt auf das Schild der Strömungswiderstand, der aufgrund der Neigung des Schildes eine das Schild nach oben drückende Vertikalkomponente hat. Dieser wirkt das Gewicht des Schildes entgegen, so daß das Schild normalerweise bis in eine maximale Eintauchstellung, die z. B. durch Anschläge 28 an der Brücke für die Lenker 23 festgelegt sein kann, eingetaucht sein wird. Ist der Strömungswiderstand größer, beispielsweise beim Anfahren der Einrichtung, wird das Schild in die mit 29' bezeichnete Position parallel zur Ausgangsposition angehoben, so daß der Strömungswiderstand durch Verringern der eintauchenden Schildfläche selbsttätig vermindert wird.

Die Lenker und/oder ihre Gelenkpunktabstände können auch ungleich lang ausgebildet sein, um so eine Änderung des Anstellwinkels des Schildes bei Änderung seiner Höhenlage zu erzielen. Bei dieser nicht dargestellten Ausführungsform wird zweckmäßigerweise die Neigung des Schildes mit zunehmender Höhenlage des Schildes flacher, um so eine weitere Reduzierung des Strömungswiderstandes zu bewirken.

**Patentansprüche**

1. Umwälzeinrichtung für Behandlungsbecken, insbesondere Misch- und/oder Belüftungsbecken mit mindestens einem, von einer über dem Becken verfahrbaren Brücke oder dergleichen Trageinrichtung getragenen, in den Beckeninhalt tauchenden Förderschild, dadurch gekennzeichnet, daß das Schild (9) gelenkig nachgiebig aufgehängt und/oder in sich nachgiebig ausgebildet ist.

2. Umwälzeinrichtung nach Anspruch 1, dadurch gekennzeichnet, daß das Schild (9) an einer horizontalen Achse (18) pendelfähig befestigt ist.

3. Umwälzeinrichtung nach Anspruch 1, dadurch gekennzeichnet, daß das Schild (19') an einer vertikalen Achse (21) befestigt ist.

4. Umwälzeinrichtung nach Anspruch 1, dadurch gekennzeichnet, daß das Schild (19) an einer geneigten Achse (20) schwenkfähig befestigt ist.

5. Umwälzeinrichtung nach Anspruch 2, 3 oder 4, dadurch gekennzeichnet, daß das Schild (19) über seine Breite in mehrere Teilschilde (9, 19, 19') unterteilt ist, die unabhängig voneinander pendelfähig bzw. schwenkfähig sind.

6. Umwälzeinrichtung nach Anspruch 5, dadurch gekennzeichnet, daß benachbarte Teilschilde (9, 19, 19') miteinander gekoppelt oder koppelbar sind.

7. Umwälzeinrichtung nach Anspruch 5 oder 6, dadurch gekennzeichnet, daß an der Kante der Teilschilde (9) abgewinkelte Trennwände (13) zum Verschließen der bei unterschiedlicher Schwenklage der Teilschilder auftretenden keilförmigen Lücken angeordnet sind.

8. Umwälzeinrichtung nach einem der Ansprüche 1 bis 7, dadurch gekennzeichnet, daß das Schild oder die Teilschilde (9) über ihre Höhe in gelenkig oder flexibel miteinander verbundene Abschnitte unterteilt sind.

9. Umwälzeinrichtung nach einem der Ansprüche 1 bis 6, dadurch gekennzeichnet, daß das Schild oder die Teilschilde (9, 19, 19') oder ihre Abschnitte aus flexiblem Material bestehen.

10. Umwälzeinrichtung nach einem der Ansprüche 2 und 5 bis 9, dadurch gekennzeichnet, daß die horizontale Schwenkachse (18) des Schildes oder der Teilschilde (9) schräg zur Fahrtrichtung der Brücke angestellt ist.

11. Umwälzeinrichtung nach Anspruch 4, dadurch gekennzeichnet, daß die von der Vertikalen abweichende Achse (20) mindestens angenähert in einer radialen Vertikalebene liegt.

12. Umwälzeinrichtung nach einem der Ansprüche 1 bis 11, dadurch gekennzeichnet, daß das Schild oder die Teilschilde (9) oder die Abschnitte V-förmig oder gekrümmt profiliert sind.

13. Umwälzeinrichtung nach einem oder mehreren der vorstehenden Ansprüche, dadurch gekennzeichnet, daß die radial weiter außen liegenden Teilschilde (9) ein auf die wirksame Fläche bezogen höheres Gewicht haben als radial weiter innen liegende.

14. Umwälzeinrichtung nach Anspruch 1, dadurch gekennzeichnet, daß das Schild (29) an der Brücke (5) mittels eines von Lenkern (23) gebildeten Gelenkvierecks aufgehängt und in einer zur Räumrichtung vorwärts geneigten Stellung geführt ist.

15. Umwälzeinrichtung nach Anspruch 14, dadurch gekennzeichnet, daß die Lenker (23) eine Parallelführung bilden.

16. Umwälzeinrichtung nach Anspruch 14, dadurch gekennzeichnet, daß die Lenker (23) und/oder ihre Gelenkpunktabstände ungleich lang sind zwecks Änderung des Anstellwinkels des Schildes (29) bei Änderung seiner Höhenlage.

17. Umwälzeinrichtung nach Anspruch 14 und 16, dadurch gekennzeichnet, daß die Neigung bei zunehmender Höhenlage des Schildes flacher wird.

## Claims

1. Circulating device for treatment tanks, in particular mixing tanks and/or aeration tanks, having at least one feed plate immersed in the tank contents and carried by a bridge or similar support device movable over the tank, characterised in that the plate (9) is suspended in flexible and articulated manner and/or is designed to be flexible per se.

2. Circulating device according to Claim 1, characterised in that the plate (9) is secured in pendulous manner to a horizontal shaft (18).

3. Circulating device according to Claim 1, characterised in that the plate (19') is secured to a vertical shaft (21).

4. Circulating device according to Claim 1, characterised in that the plate (19) is pivotably secured to an inclined shaft (20).

5. Circulating device according to Claims 2, 3 or 4, characterised in that the plate (19) is divided up over its breadth into a plurality of part plates (9, 19, 19') which are pendulous or pivotable independently of one another.

6. Circulating device according to Claim 5, characterised in that the adjacent part plates (9, 19, 19') are coupled or can be coupled to one another.

7. Circulating device according to Claim 5 or 6, characterised in that at the edge of the part plates (9) there are arranged angular dividing walls (13) for closing the wedge-shaped gaps occurring with different pivotal positions of the part plates.

8. Circulating device according to one of Claims 1 to 7, characterised in that the plate or the part plates (9) are divided up along their length into sections connected to one another in articulated manner or flexibly.

9. Circulating device according to one of Claims 1 to 6, characterised in that the plate or the part plates (9, 19, 19') or their sections are formed from flexible material.

10. Circulating device according to one of Claims 2 and 5 to 9, characterised in that the horizontal pivot shaft (18) for the plate or for the part plates (9) is positioned obliquely to the travel direction of the bridge.

11. Circulating device according to Claim 4, characterised in that the shaft (20) deviating from the vertical lies at least approximately in a radial vertical plane.

12. Circulating device according to Claims 1 to 11, characterised in that the plate or the part plates (9) or the sections are V-shaped or curved in profile.

13. Circulating device according to one or more of the preceding claims, characterised in that the radially outerlying part plates (9) are of greater weight, in relation to the effective surface, than the radially innerlying ones.

14. Circulating device according to Claim 1, characterised in that the plate (29) is suspended from the bridge (5) by means of a four-bar linkage formed by links (23) and is guides in a position inclined forwardly relative to the direction of clearing.

15. Circulating device according to Claim 14, characterised in that the links (23) form a parallel motion.

16. Circulating device according to Claim 14, characterised in that the links (23) and/or their pivot point distances are of unequal length for the purpose of varying the setting angle of the plate (29) upon altering its vertical position.

17. Circulating device according to Claims 14 and 16, characterised in that the inclination becomes flatter as the vertical position of the plate increases.

## Revendications

1. Dispositif de circulation pour bassins de traitement, en particulier pour bassins de mélange et/ou d'aérage, comportant au moins un panneau de mise en circulation qui plonge dans le contenu du bassin et qui est porté par un pont ou un dispositif porteur similaire, susceptible de ce déplacer audessus du bassin, caractérisé en ce que le panneau (9) est suspendu de manière souple et articulée et/ou est réalisé par luimême de façon à être souple.

2. Dispositif de circulation selon la revendication 1, caractérisé en ce que le panneau (9) est fixé à un axe horizontal (18) de manière à pouvoir effectuer un mouvement pendulaire.

3. Dispositif de circulation selon la revendication 1, caractérisé en ce que le panneau (19') est fixé à un axe vertical (21).

4. Dispositif de circulation selon la revendication 1, caractérisé en ce que le panneau (19) est fixé à un axe incliné (20) de manière à pouvoir pivoter.

5. Dispositif de circulation selon l'une quelconque des revendications 2 à 4, caractérisé en ce que le panneau (19) est subdivisé sur sa largeur en plusieurs panneaux partiels (9, 19, 19') qui peuvent effectuer un mouvement pendulaire ou pivoter indépendamment les uns des autres.

6. Dispositif de circulation selon la revendication 5, caractérisé en ce que des panneaux partiels voisins (9, 19, 19') sont accouplés ou accouplables entre eux.

7. Dispositif de circulation selon l'une quelconque des revendications 5 ou 6, caractérisé en ce qu'il est disposé, sur les bords des panneaux partiels (9), des cloisons coudées (13) destinées à fermer les intervalles en forme de coin qui se produisent dans des positions différentes de pivotement des panneaux partiels.

8. Dispositif de circulation selon l'une quelconque des revendications 1 à 7, caractérisé en ce que le panneau ou les panneaux partiels (9) sont subdivisés dans le sens de la hauteur en parties qui sont raccordées entre elles de manière articulée ou flexible.

9. Dispositif de circulation selon l'une quelconque des revendications 1 à 6, caractérisé en ce que le panneau, les panneaux partiels (9, 19, 19'), ou leurs parties, sont faits d'un matériau flexible.

10. Dispositif de circulation selon l'une quelconque des revendications 2 et 5 à 9, caractérisé en ce que l'axe horizontal (18) demontage pivotant du panneau ou des panneaux partiels (9) est disposé obliquement par rapport à la direction de déplacement du pont.

11. Dispositif de circulation selon la revendication 4, caractérisé en ce que l'axe (20) qui s'écarte de la verticale est situé au moins approximativement dans un plan vertical radial.

12. Dispositif de circulation selon l'une quelconque des revendications 1 à 11, caractérisé en ce que la panneau, les panneaux partiels (9), ou leurs parties, ont un profil en V ou cintré.

13. Dispositif de circulation selon l'une quelconque des caractéristiques 1 à 12, caractérisé en ce que les panneaux partiels (9) qui se trouvent plus à l'extérieur en direction radiale ont un poids plus élevé, par unité de surface active, que ceux qui sont situés plus à l'intérieur en direction radiale.

14. Dispositif de circulation selon la revendication 1, caractérisé en ce que le panneau (29) est suspendu au pont (5) au moyen d'un quadrilatère articulé formé de bras oscillants (23) et est guidé dans une position inclinée d'arrière en avant vers la direction de curage.

15. Dispositif de circulation selon la revendication 14, caractérisé en ce que les bras oscillants (23) forment un parallélogramme.

16. Dispositif de circulation selon la revendication 14, caractérisé en ce que les bras oscillants (23) et/ou les écarts entre leurs points d'articulation ont des longueurs inégales, afin que l'angle d'attaque du panneau (29) soit modifié lorsque la position en hauteur de celui-ci varie.

17. Dispositif de circulation selon la revendication 14 ou 16, caractérisé en ce que l'inclinaison du panneau par rapport à la verticale diminue au fur et à mesure que sa position s'élève.

## Fig.1

## Fig.2

Fig.3

Fig.4

9

# Fig.5

# Fig.6

Fig.7